# EUROPÄISCHE PATENTSCHRIFT

(11) **EP 2 949 198 B1**
(45) Veröffentlichungstag und Bekanntmachung des Hinweises auf die Patenterteilung: **01.04.2020**
(21) Anmeldenummer: 14169858.9
(22) Anmeldetag: 26.05.2014
(51) Int. Cl.: A01D 34/86

(54) **VORRICHTUNG ZUM BEARBEITEN VON BODENFLÄCHEN**
DEVICE FOR PROCESSING SOIL SURFACES
DISPOSITIF DESTINÉ AU TRAITEMENT DES SURFACES DE TERRE

(43) Veröffentlichungstag der Anmeldung: 02.12.2015
(73) Patentinhaber: Maschinenfabrik Bermatingen GmbH & Co. KG, 88697 Bermatingen (DE)
(72) Erfinder: Gotterbarm, Roderich, 88697 Bermatingen (DE)
(74) Vertreter: Engelhardt, Volker

(56) Entgegenhaltungen:
- EP-A1- 1 057 398
- EP-A2- 0 150 975
- DE-A1-102005 018 987
- DE-A1-102005 035 634
- DE-U1- 20 211 861

## Beschreibung

Die Erfindung bezieht sich auf eine Vorrichtung zur Bearbeitung von Bodenflächen, insbesondere zur Abstützung eines Mähwerkes nach dem Oberbegriff des Patentanspruches 1.

Solche Vorrichtungen werden üblicherweise auch als Mulchgeräte bezeichnet und werden seit vielen Jahren an Fahrzeugen als sogenannte Seiten- oder Frontmulchgeräte angebaut. Mit Hilfe dieser Seiten- oder Frontmulchgeräte können Wiesen, Äcker, Obstplantagen oder dergleichen bearbeitet, beispielsweise gemäht oder umgepflügt, werden.

Die Mulchgeräte sind dabei über ein Traggestell an einem Fahrzeug befestigt. Das Traggestell ist höhenverstellbar an dem Fahrzeug angelengt, so dass das Mulchgerät in Richtung der zu bearbeitenden Bodenfläche zugestellt bzw. von dieser wegbewegt werden kann. Das Fahrzeug ist nämlich in zwei Betriebszuständen einzusetzen, nämlich zum einen, um dieses im Fahrmodus zu bewegen und zum anderen, um mit Hilfe des angebrachten Mulchgerätes die Bodenbearbeitung im Betriebszustand durchzuführen.

Nachteiligerweise können die Traggestelle zwar von dem Fahrzeug abmontiert werden, jedoch sind diese nicht derart verstellbar, dass zum einen während des Fahrmodus das Mähwerk bzw. das Traggestell aus dem Sichtbereich des Fahrers derart verfahren werden kann, dass die Sicht für den Fahrer durch die Traggestelle und das Mähwerk nicht behindert ist und zum anderen können die Traggestelle lediglich entweder als Seiten- oder als Frontmulchgeräte verwendet und eingesetzt werden. Eine wahlweise und wechselweise Positionierung sowie einfache und unkomplizierter Positionsänderungen des Mulchgerätes ist mit den fest angebrachten Traggestellen an dem Fahrzeug nicht möglich. Eine Vorrichtung zur Bearbeitung von Bodenflächen gemäß dem ersten Teil des Anspruchs 1 ist aus der DE-A-10 2005 018987 bekannt.

Es ist daher Aufgabe der Erfindung, eine Vorrichtung der eingangs genannten Gattung zur Verfügung zu stellen, mit deren Hilfe beispielsweise ein Mähwerk, Schneefräse oder ein sonstiges zur Bodenbearbeitung geeignetes Gerät an einem Fahrzeug abstützbar ist und dass gleichzeitig die Anordnung des Mähwerkes oder des Bodenbearbeitungsgerätes an mindestens zwei unterschiedlichen Seiten des Fahrzeuges positionierbar ist, und zum anderer das Traggestell der Vorrichtung und das Mähwerk bzw. das Bodenbearbeitungsgerät während des Fahrmodus derart verstaut werden kann, dass die Sichtbereiche des Fahrers nicht behindert sind.

Diese Aufgaben sind erfindungsgemäß durch die Merkmale des kennzeichnenden Teils des Patentanspruchs 1 gelöst.

Weitere vorteilhafte Weiterbildungen der Erfindung ergeben sich aus den Unteransprüchen.

Dadurch, dass an dem Führungsschlitten zwei mittels eines Gelenkes verbundene Tragarme angeordnet sind, dass das freie Ende des ersten Tragarmes an dem Führungsschlitten mittels eines Gelenkes verschwenkbar gelagert ist, dass das freie Ende des zweiten Tragarmes mittels eines Gelenkes an dem Fahrzeug, vorzugsweise an der Schienenführung, verschwenkbar gelagert ist, dass der Winkel zwischen den Tragarmen einstellbar ist, dass der Führungsschlitten durch die Tragarme quer oder parallel zur Fahrtrichtung entlang der Führungsschiene mittels der Hydraulik- oder Pneumatik- oder Elektroeinrichtung durch die das Mähwerk angetrieben ist, bewegbar ist, kann die Halte-Vorrichtung bestehend aus dem Traggestell, dem Mähwerk oder dem Bodenbearbeitungsgerät derart an dem Fahrzeug positioniert werden, dass der Sichtbereich des Fahrers während des Fahrmodus nicht behindert ist und gleichzeitig kann das Mähwerk oder das Bodenbearbeitungsgerät im Frontbereich oder im Seitenbereich des Beifahrers oder des Fahrers verwendet werden. Ein rascher Positionswechsel des Mähwerkes ist durch Betätigen des Hydraulik- oder Pneumatikkreislaufes möglich.

Da sowohl das Mähwerk oder das Bodenbearbeitungsgerät als auch die Verstellung des Traggestells bzw. des Tragarmes mit einem gemeinsamen Hydraulik- oder Pneumatikkreislauf bzw. Einrichtung erfolgt, deren jeweiligen Hydraulik- oder Pneumatikkolben individuell betätigbar sind, ist eine exakte Ausrichtung des Mähwerkes in Bezug auf den Neigungswinkel der zu bearbeitenden Bodenfläche gegeben. Das Mähwerk kann nämlich insbesondere aus der Horizontalen um das Gelenk nach oben oder nach unten verschwenkt werden, um eine entsprechende Hangneigung oder Hangsteigung nachzubilden, so dass das Mähwerk oder das Bodenbearbeitungsgerät permanent parallel zu der Bodenfläche und beabstandet zu dieser angeordnet ist.

Zudem ist die Montage und die Betriebsweise einer derart ausgestalteten Vorrichtung kostengünstig und zeitsparend, denn die bereits vorhandenen Antriebsmittel, beispielsweise der Hydraulik- oder Pneumatikkreislauf, können auch für die Bewegung und Ausrichtung der Tragarme und deren Halterung verwendet werden.

Dies bietet den erheblichen Vorteil, dass solche Halte-Vorrichtungen äußerst kostengünstig herstellbar sind. Darüberhinaus können diese Halte-Vorrichtungen als individueller Bausatz angesehen werden, die auch nachträglich an beliebige Fahrzeuge anbaubau sind.

In der Zeichnung ist ein erfindungsgemäßes Ausführungsbeispiel dargestellt, das nachfolgend näher erläutert ist. Im Einzelnen zeigt:
- Figur 1: eine Vorrichtung, bestehend aus einem Fahrzeug und einer Halte-Vorrichtung, die einen zweiteiligen Tragarm aufweist, der an einer quer zur Fahrtrichtung des Fahrzeuges angebrachten Schienenführung linear beweglich gelagert ist und an dessen gegenüberliegendem freien Ende ein Mähwerk vorgesehen ist, in perspektivischer und in Explosionsdarstellung,
- Figur 2: die Vorrichtung gemäß Figur 1, in der das Mähwerk im Frontbereich des Fahrzeuges angeordnet ist, im Fahrmodus,
- Figur 3: die Vorrichtung gemäß Figur 2, bei der das Mähwerk von einer Ausgangsposition in eine Bearbeitungsposition im Bereich des Beifahrers bewegt ist,

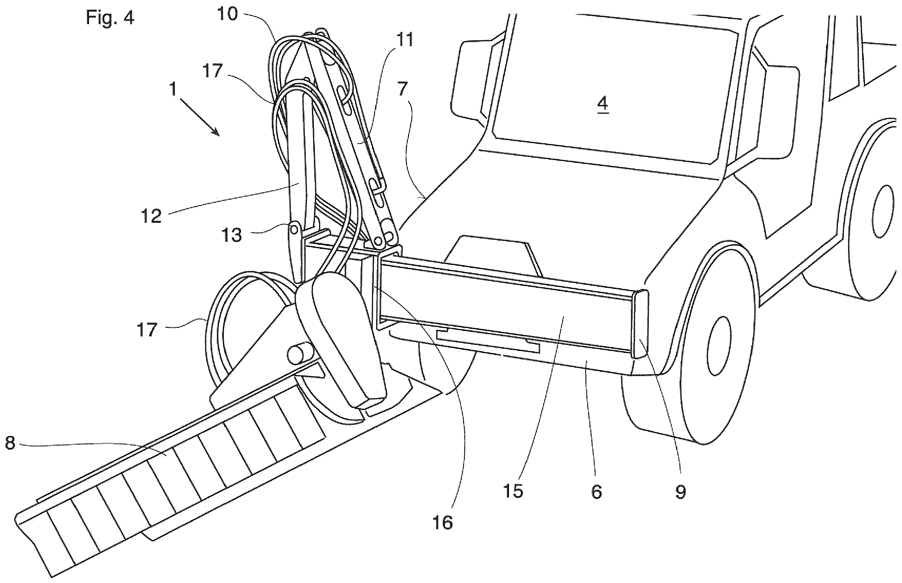

- Figur 4: die Vorrichtung gemäß Figur 3, in einer Arbeitsposition und
- Figur 5: eine schematische Darstellung für eine Hydraulikeinrichtung durch die die Halte-Vorrichtung gemäß den Figuren 1 bis 4 bewegbar ist.

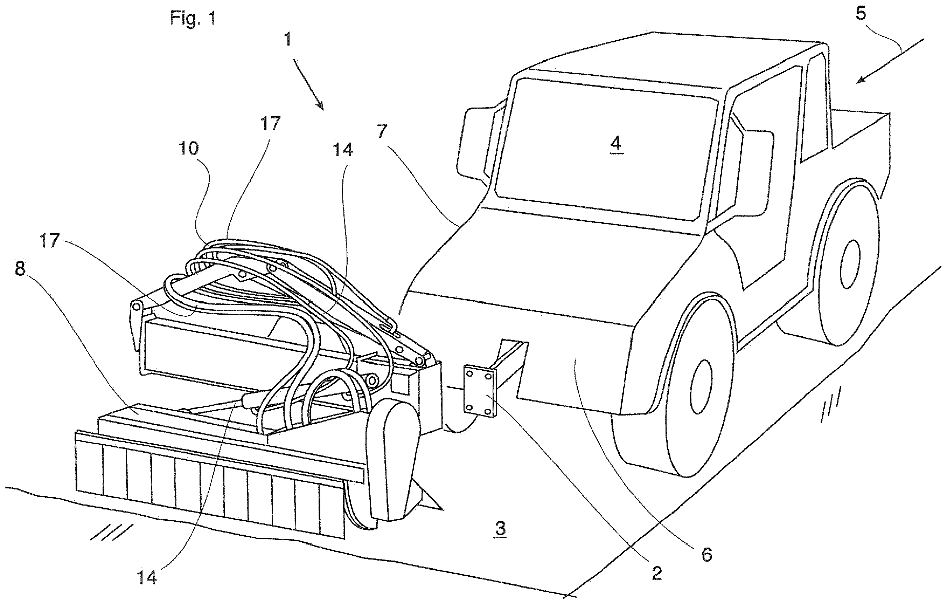

In Figur 1 ist eine Vorrichtung 1 zur Bearbeitung von Bodenflächen 3 zu entnehmen, die im Wesentlichen aus einer nachfolgend näher erläuterten Halte-Vorrichtung 2 und einem Fahrzeug 4 besteht. Das Fahrzeug 4 ist dabei als Traktor, Unimog oder dergleichen ausgestaltet und weist einen Antriebsmotor auf, durch den das Fahrzeug 4 in eine Fahrtrichtung 5 bewegt ist.

Die Halte-Vorrichtung 2 ist einerseits an dem Fahrzeug 4 befestigt und trägt an dem freien dem Fahrzeug 4 gegenüberliegenden Ende ein Mähwerk 8. Durch das Mähwerk 8 soll die Bodenfläche 3 bearbeitet werden können. Das Mähwerk 8 weist eine Vielzahl von Messerwellen auf, die entgegengesetzt der Fahrtrichtung 5 rotieren und Grashalme abschneiden. Die derart abgeschnittenen Grashalme werden durch die Rotationsgeschwindigkeit des Mähwerkes 8 in Richtung des Fahrzeuges 4 gefördert und an einem nicht dargestellten Auslassstutzen eingeleitet und von diesem definiert auf der Bodenfläche 3 in Bahnen abgelegt.

Die in Figur 1 abgebildete Position des Mähwerkes 8 und der Halte-Vorrichtung 2 an dem Fahrzeug 4 entspricht dabei dem Fahrzustand oder -modus der Vorrichtung 1; das Mähwerk 8 ist demnach stillgesetzt und von der Bodenfläche 3 beabstandet angeordnet, so dass das Fahrzeug 4 in einer üblichen Fahrgeschwindigkeit bewegt werden kann. Das Mähwerk kann in dieser Stellung abgesenkt und in Betrieb gesetzt sein, so dass diese in einem Arbeitszustand als Frontmäher verwendbar ist.

Die Halte-Vorrichtung 2 ist in dem Fahrmodus derart eingeklappt und ausgerichtet, dass das Sichtfeld für den Fahrer des Fahrzeuges 4 freigegeben ist, dass also die Halte-Vorrichtung 2 die Sicht des Fahrers nicht behindert. Die Halte-Vorrichtung 2 ist folglich an der Frontseite des Fahrzeuges unterhalb der Windschutzscheibe positioniert.

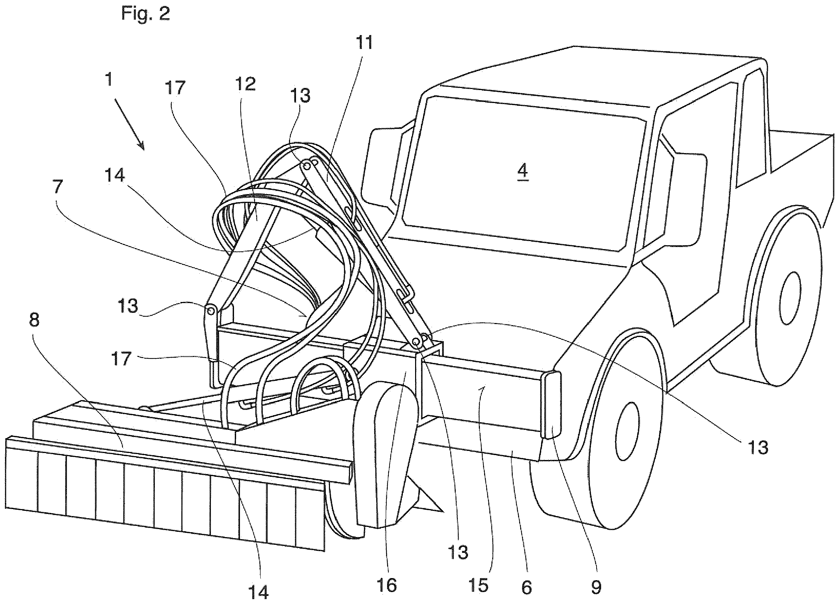

In Figur 2 ist eine der möglichen Arbeitsstellungen des Mähwerkes 8 abgebildet. Das Mähwerk 8 ist an der Frontseite des Fahrzeuges 4 positioniert und in Richtung der Bodenfläche 3 abgesenkt, um die dort wachsenden Grashalme abzuschneiden oder die Bodenfläche 3 andersartig zu bearbeiten.

Zur Bewegung der Halte-Vorrichtung 2 ist zunächst eine Hydraulikeinrichtung 10 vorgesehen, die eine von dem Motor des Fahrzeuges 4 angetriebene Pumpe 18 aufweist, die mittels einer Steuereinrichtung 19 betätigbar ist und in zwei Förderrichtungen umstellbar ist.

Die Halte-Vorrichtung 2 besteht aus einem ersten und einem zweiten Tragarm 11 und 12, die ein Traggestell bilden und die über ein Gelenk 13 verschwenkbar miteinander verbunden sind. Der erste Tragarm 11 ist dabei dem Fahrzeug 4 zugewandt und über ein weiteres Gelenk 13 mit einem Führungsschlitten 16 verbunden. Der Führungsschlitten 16 weist im Wesentlichen ein U-förmig oder I-förmig ausgestaltetes Querschnittsprofil auf, das in einer an diese Kontur angepassten Schienenführung 15 angeordnet ist. Die Schienenführung 15 ist fest mit der Frontseite des Fahrzeuges 4 verbunden und verläuft senkrecht zu der Fahrtrichtung 5 des Fahrzeuges 4.

Der Führungsschlitten 16 wird durch einen Hydraulikkolben 14 linear hin und her betätigt, so dass der Führungsschlitten 16 über die gesamte Länge der Schienenführung 15 positionierbar ist. Die Tragarme 11, 12 können durch weitere Kolben 14 zueinander bzw. in Bezug auf das Fahrzeug 4 verschwenkt oder verdreht sein, so dass das Mähwerk 8 in völlig unterschiedlichen Positionen angeordnet werden kann.

Zwischen der Schienenführung 15 und dem ersten Tragarm 11 ist ein weiterer Hydraulikkolben 14 vorgesehen, durch den die Steigung des ersten Tragarms 11 bzw. der Winkel zwischen dieser und der Schienenführung 15 einstellbar ist. Zwischen dem ersten und dem zweiten Tragarm 11 und 12 ist ein weiterer Hydraulikkolben 14 angeordnet, durch den der Winkel zwischen dem ersten und dem zweiten Tragarm 11, 12 einstellbar ist. Auch zwischen dem zweiten Tragarm 12 und dem Mähwerk 8 ist ein Hydraulikkolben 14 angeordnet, durch den das Mähwerk 8 parallel zu der Neigung der Bodenfläche 3 ausgerichtet werden kann. Sämtliche der Hydraulikkolben 14 sind in der Hydraulikeinrichtung 10 in einen gemeinsamen Steuerkreislauf angeordnet und können individuell zueinander von der Pumpe 18 in entsprechender Weise betätigt werden, um die Ausrichtung der Tragarme 11, 12 bzw. des Mähwerkes 8 und des Führungsschlittens 16 zu bewerkstelligen.

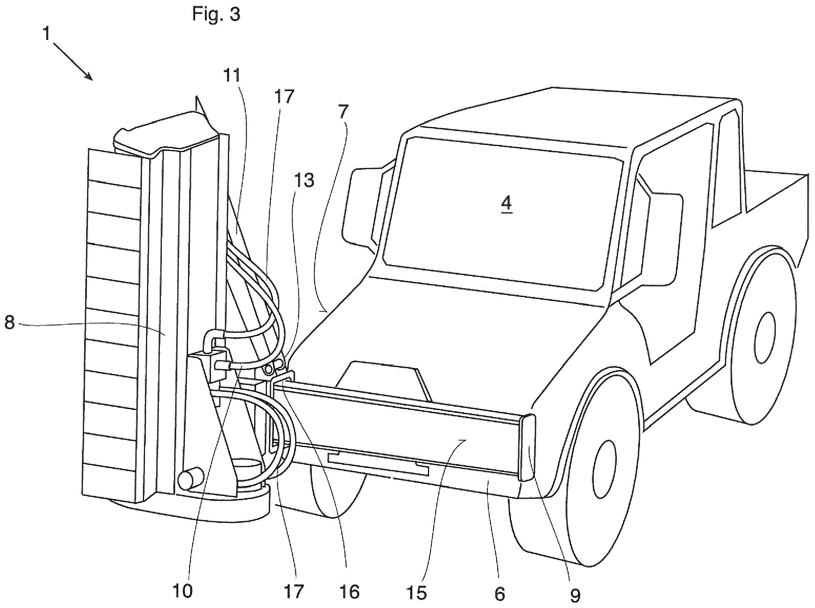

In Figur 3 ist eine Zwischenstellung des Mähwerkes 8 zu entnehmen, das nämlich als Fronmähwerk 8 oder als Seitenmähwerk 8 einsetzbar und positionierbar ist. Das Mähwerk 8 soll nämlich über die Halte-Vorrichtung 2 auf die Beifahrerseite, also auf die rechte Seite des Fahrzeuges 4, bewegbar sein, um dort beispielsweise den Seitenstreifen einer Straße bearbeiten zu können.

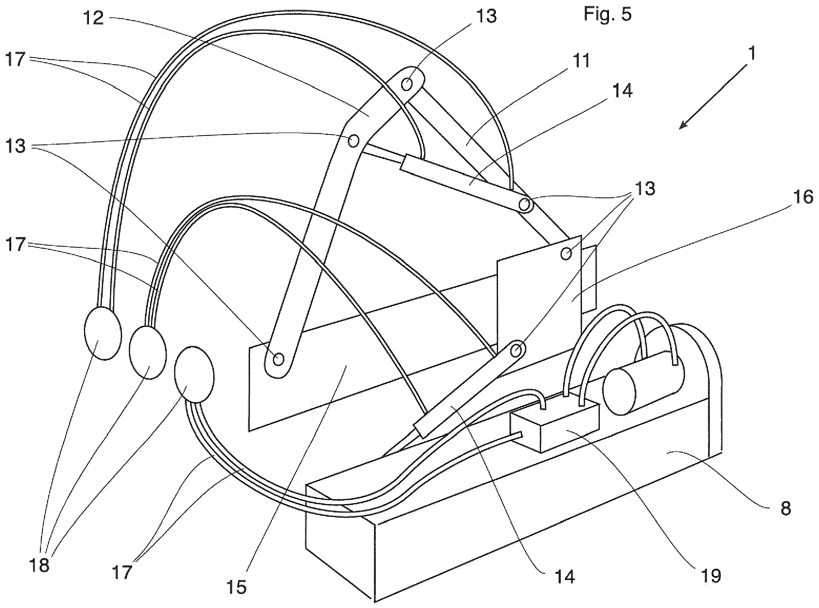

Aus Figur 5 ist ersichtlich, wie die Hydraulikeinrichtung 10 die einzelnen Hydraulickolben 14 mit Hydraulikflüssigkeit versorgt und dadurch den Druckzustand in den Hydaulikkolben 14 derart regelt, dass die Hydraulikkolben 14 aus- oder eingefahren werden, da diese mit Hilfe der in den Hydraulikkolben 14 vorhandenen Druckräumen in zwei unterschiedliche Richtungen mit Druck beaufschlagbar sind.

Es ist denkbar, das Mähwerk 8 durch einen Pflug, durch ein Heuwendegerät oder eine sonstige Schneidvorrichtung, beispielsweise zum Durchtrennen von Maispflanzen oder Getreidehalmen, zu ersetzen.

Die Halte-Vorrichtung 2 kann als separater Bausatz ausgestaltet sein, um diesen an ein Fahrzeug 4 nachträglich oder fallweise zu montieren.

Das jeweilige Gelenk 13 weist mehrere translatorische und rotatorische Freiheitsgrade auf, um den jeweiligen Tragarm 11 bzw. 12 oder das Mähwerk 8 entsprechend ausrichten zu können. Das Gelenk 13 sollte in zwei translatorischen Achsen und um die jeweilige Anlenkungsachse verstellbar bzw. rotierbar sein.

Die Schienenführung 15 kann fakultativ auch an einer der Seiten des Fahrzeuges 4 angebracht sein, also parallel zu der Fahrtrichtung 5 verlaufen. Das Mähwerk 8 kann durch die Tragarme 11, 12 im Front- oder Seitenbereich positioniert sein. Das Mähwerk 8 kann zudem als Schnee- oder Eisfräse sowie als Kehrgerät ausgestaltet sein.

## Patentansprüche

1. Vorrichtung (1) zur Bearbeitung von Bodenflächen (3), zur Abstützung eines Mähwerkes (8) oder Bodenbearbeitungsgerätes, bestehend aus einem Fahrzeug (4) und einem am Fahrzeug (4) befestigten Traggestell (9), an dem das Mähwerk (8) oder das Bodenbearbeitungsgerät angebracht ist und durch eine Schienenführung (15) ein Führungsschlitten (16) quer oder parallel zur Fahrtrichtung (5) des Fahrzeuges (4) bewegbar angebracht ist, und aus einer Hydraulik- oder Pneumatik-Einrichtung (10), durch die das Mähwerk (8) oder das Bodenbearbeitungsgerät in Rotation versetzt ist,
**dadurch gekennzeichnet,**
**dass** an dem Führungsschlitten (16) zwei mittels eines ersten Gelenkes (13) verbundene Tragarme (11, 12) angeordnet sind, dass das freie Ende des ersten Tragarmes (11) an dem Führungsschlitten (16) mittels eines zweiten Gelenkes (13) verschwenkbar gelagert ist, dass das freie Ende des zweiten Tragarmes (12) mittels eines zweiten Gelenkes (13) an der Schienenführung (15) des Fahrzeuges (4), verschwenkbar gelagert ist, dass der Winkel zwischen den Tragarmen (11, 12) einstellbar ist, dass der Führungsschlitten (16) quer oder parallel zur Fahrtrichtung (5) des Fahrzeuges (4) angeordneten Führungsschiene angebracht ist, dass der Führungsschlitten (16) entlang der Führungsschiene und die Tragarme (11, 12) mittels der Hydraulik- oder Pneumatik- oder Elektroeinrichtung (10), durch die das Mähwerk (8) und das Traggestell (9) angetrieben ist, bewegbar ist.

2. Vorrichtung nach Anspruch 1;
**dadurch gekennzeichnet,**
**dass** das Mähwerk (8) oder das Bodenbearbeitungsgerät mittels eines Kardan-Gelenkes (13) an dem Tragarm (12) verschwenkbar gelagert ist.

3. Vorrichtung nach einem der Ansprüche 1 oder 2,
**dadurch gekennzeichnet,**
**dass** die Tragarme (11, 12) und das Mähwerk (8) mittels jeweils eines Hydraulik- oder Pneumatikkolben (4) bewegbar sind, und dass die Bewegungen der einzelnen Tragarme (11, 12) unabhängig voneinander durch die Hydraulik- oder Pneumatikeinrichtung (10) steuerbar ist.

4. Vorrichtung nach einem der vorgenannten Ansprüche,
**dadurch gekennzeichnet,**
**dass** die Hydraulik- oder Pneumatikeinrichtung (10) aus einer Vielzahl von Hydraulik- oder Pneumatikkolben (14) gebildet ist, die jeweils dem Führungsschlitten (16), den Tragarmen (11, 12) und/oder dem Mähwerk (8) oder dem Bodenbearbeitungsgerät zu deren jeweiligen Bewegung und Ausrichtung zugeordnet sind.

5. Vorrichtung nach Anspruch 4,
**dadurch gekennzeichnet,**
**dass** die einzelnen Kolben (14) in einem gemeinsamen Hydraulik- oder Pneumatikkreislauf angeordnet sind, die von einer Pumpe (18) als Antriebsmittel und von einer Steuereinrichtung (19) betätigbar sind.

6. Vorrichtung nach einem der vorgenannten Ansprüche,
**dadurch gekennzeichnet,**
**dass** das jeweilige Gelenk (13) um zwei translatorische und um mindestens einen rotatorischen Freiheitsgrad bewegbar ist.

## Claims

1. A device (1) for processing soil surfaces (3), for supporting a mower (8) or soil tilling implement, consisting of a vehicle (4) and a support frame (9) attached to the vehicle (4), to which the mower (8) or the soil tilling implement is attached, and a guide carriage (16) is attached by a rail guide (15) so as to be movable transversely or parallel to the direction of travel (5) of the vehicle (4), and of a hydraulic or pneumatic device (10) by means of which the mower (8) or the soil tilling implement is set in rotation,
**characterised in that**,
two supporting arms (11, 12) connected by means of a first joint (13) are arranged on the guide carriage (16), **in that** the free end of the first supporting arm (11) is mounted pivotably on the guide carriage (16) by means of a second joint (13), **in that** the free end of the second supporting arm (12) is mounted pivotably on the rail guide (15) of the vehicle (4) by means of a second joint (13), **in that** the angle between the support arms (11, 12) is adjustable, **in that** the guide carriage (16) is mounted transversely or parallel to the direction of travel (5) of the vehicle (4), **in that** the guide carriage (16) is mounted along the guide rail and the support arms (11, 12) are movable by means of the hydraulic or pneumatic or electric device (10) which drives the mower (8) and the support frame (9).

2. The device in accordance with Claim 1,
**characterised in that**,
the mower (8) or the soil tilling implement is mounted pivotably on the support arm (12) by means of a cardan joint (13).

3. The device in accordance with Claim 1 or 2,
**characterised in that**,
the support arms (11, 12) and the mower (8) can be moved by means of a respective hydraulic or pneumatic piston (4), and **in that** the movements of the individual support arms (11, 12) can be controlled independently of one another by the hydraulic or pneumatic device (10).

4. The device in accordance with one of the aforementioned claims,
**characterised in that**,
**in that** the hydraulic or pneumatic device (10) is formed from a plurality of hydraulic or pneumatic pistons (14), each of which is assigned to the guide carriage (16), the support arms (11, 12) and/or the mower (8) or the soil tilling implement for their respective movement and alignment.

5. The device in accordance with Claim 4,
**characterised in that**,
the individual pistons (14) are arranged in a common hydraulic or pneumatic circuit, which can be actuated by a pump (18) as the driving means and by a control device (19).

6. The device in accordance with one of the aforementioned claims,
**characterised in that**,
**in that** the respective joint (13) can be moved by two degrees of freedom in translation and by at least one degree of freedom in rotation.

## Revendications

1. Dispositif (1) servant au traitement de surfaces du sol (3), à l'appui d'une moissonneuse (8) ou d'un appareil de traitement du sol, comprenant un véhicule (4) et un cadre porteur (9) monté sur le véhicule (4) qui porte la moissonneuse (8) ou l'appareil de traitement du sol et où, moyennant une glissière (15), il est monté un chariot (16) qui se laisse déplacer en direction transversale ou parallèlement par rapport au sens de marche (5) du véhicule (4), et un dispositif hydraulique ou pneumatique (10) permettant de mettre en rotation la moissonneuse (8) ou l'appareil de traitement du sol,
**caractérisé en ce que**
sur le chariot (16), il est prévu deux bras porteurs (11, 12) raccordés par une première articulation (13), que l'extrémité libre du premier bras porteur (11) est articulée sur le chariot (16) à l'aide d'une deuxième articulation (13), que l'extrémité libre du deuxième bras porteur (12) est articulée sur la glissière (15) du véhicule (4) à l'aide d'une deuxième articulation (13), que l'angle entre les bras porteurs (11, 12) se laisse ajuster, que le chariot (16) se laisse déplacer en direction transversale ou parallèlement au sens de marche (5) du véhicule (4) le long de la glissière, que le chariot (16) et les bras porteurs (11, 12) se laissent mouvoir à l'aide de l'équipement hydraulique ou pneumatique ou l'équipement électrique (10) assurant l'actionnement de la moissonneuse (8) et du cadre porteur (9).

2. Dispositif d'après la revendication 1,
**caractérisé en ce que**
la moissonneuse (8) ou l'appareil de traitement du sol est logé par un joint à Cardan (13) de manière mobile sur le bras porteur (12).

3. Dispositif d'après les revendications 1 ou 2,
**caractérisé en ce que**
les bras porteurs (11, 12) et la moissonneuse (8) se laissent déplacer respectivement par un piston hydraulique ou pneumatique (4) et que les mouvements des bras porteurs individuels (11, 12) se laissent commander indépendamment l'un de l'autre par l'équipement hydraulique ou pneumatique (10).

4. Dispositif d'après une des revendications précédentes,
**caractérisé en ce que**
l'équipement hydraulique ou pneumatique (10) est formé par une multitude de pistons hydrauliques ou pneumatiques (14) assignés respectivement au chariot (16), aux bras porteurs (11, 12) et/ou à la moissonneuse (8) ou à l'appareil de traitement du sol, afin d'en assurer le mouvement et l'alignement.

5. Dispositif d'après la revendication 4,
**caractérisé en ce que**
les pistons individuels (14) sont disposés dans un circuit hydraulique ou pneumatique commun, actionnés par une pompe (18) en tant que moyen d'actionnement et par un équipement de commande (19).

6. Dispositif d'après une des revendications précédentes,
**caractérisé en ce que**
l'articulation respective (13) se laisse mouvoir autour de deux degrés de liberté translationnels et au moins un degré de liberté rotatif.
